Europäisches Patentamt

European Patent Office

Office européen des brevets

(19)

(11) Veröffentlichungsnummer : **0 312 851 B1**

(12) **EUROPÄISCHE PATENTSCHRIFT**

(45) Veröffentlichungstag der Patentschrift :
**04.09.91 Patentblatt 91/36**

(51) Int. Cl.⁵ : **G01N 23/04,** G01N 23/20,
**G01V 5/00**

(21) Anmeldenummer : **88116592.2**

(22) Anmeldetag : **06.10.88**

(54) **Röntgenscanner.**

(30) Priorität : **19.10.87 DE 3735347**

(43) Veröffentlichungstag der Anmeldung :
**26.04.89 Patentblatt 89/17**

(45) Bekanntmachung des Hinweises auf die
Patenterteilung :
**04.09.91 Patentblatt 91/36**

(84) Benannte Vertragsstaaten :
**DE FR GB**

(56) Entgegenhaltungen :
**DE-A- 2 845 369**
**GB-A- 2 054 319**
**US-A- 3 927 318**
**US-A- 4 229 651**
**US-A- 4 366 382**

(56) Entgegenhaltungen :
**US-A- 4 495 636**
**IEEE TRANSACTIONS ON NUCLEAR SCIEN-**
**CE, Band NS-29, Nr. 3, Juni 1982, Seiten**
**1260-1265, IEEE, New York, US; G. HARDING:**
**"On the sensitivity and application possibili-**
**ties of a novel compton scatter imaging sy-**
**stem"**

(73) Patentinhaber : **Heimann GmbH**
**Weher Köppel 6 Postfach 30 07**
**W-6200 Wiesbaden 1 (DE)**

(72) Erfinder : **Geus, Georg**
**Asternweg 56**
**W-6220 Wiesbaden (DE)**

(74) Vertreter : **Fuchs, Franz-Josef, Dr.-Ing. et al**
**Postfach 22 13 17**
**W-8000 München 22 (DE)**

## Beschreibung

Die Erfindung betrifft einen Röntgenscanner mit einem Röntgenstrahler mit Blende für ein fächerförmiges Röntgenstrahlenbündel auf einer Seite und einer Zeile von einzelnen Detektoren auf der anderen Seite einer Transportvorrichtung für Prüfgut sowie mit einer Elektronik zur seriellen Erfassung und Verarbeitung der Detektorsignale. So ein Röntgenscanner ist aus der US-A-4366382 bekannt.

Ein Röntgenscanner dieser Art wird zur Untersuchung des Inhaltes von Gepäckstücken verwendet. Das Prüfgut wird auf der Transportvorrichtung mit einer bestimmten Geschwindigkeit an der in einer Ebene senkrecht zur Transportrichtung des Prüfgutes angeordneten Detektorzeile vorbeibewegt und streifenweise abgetastet. Die Abtastwerte, deren Zahl von der Anzahl der Detektoren in der Detektorzeile abhängt, werden nach Digitalisierung entweder in Echtzeit ausgewertet oder zum Aufbau eines Videobildes in einen Speicher geschrieben.

Bei der Durchstrahlung des Prüfgutes entsteht Streustrahlung. Dies gilt insbesondere für wenig absorbierende Teile, z.B. Plastiksprengstoff.

Der Erfindung liegt die Aufgabe zugrunde, einen Röntgenscanner der eingangs genannten Art so auszubilden, daß eine individuelle Erfassung der Streustrahlung erfolgt, so daß aus dieser Streustrahlung entsprechenden Signalen ein Streustrahlungsbild aufgebaut werden kann.

Diese Aufgabe ist erfindungsgemäß dadurch gelöst, daß neben dem Prüfraum ein hochempfindlicher Streustrahlungsdetektor mit einem Modulator so angeordnet ist, daß er nicht von der Primärstrahlung, sondern nur von der vom Prüfgut ausgesandten Streustrahlung getroffen wird und daß Mittel zur Darstellung der Streustrahlungsverteilung vorhanden sind, wobei der Modulator auf die Abtastfrequenz der Zeile synchronisiert ist, derart, daß er denjenigen Streustrahlungsanteil zum Streustrahlungsdetektor weiterleitet, der in dem Prüfgutbereich entsteht, dessen Detektorsignal der Zeile jeweils abgetastet wird. Bei dem erfindungsgemäßen Röntgenscanner werden durch das zweite Detektorsystem Signale gewonnen, die nur der Streustrahlung entsprechen und die bildlich dargestellt werden. Aufgrund der Synchronisation des Modulators mit der Abtastfrequenz der Zeile wird immer jeweils derjenige Streustrahlungsanteil erfaßt, der in dem Prüfgutbereich entsteht, dessen Detektorsignal der Zeile jeweils abgetastet wird. Nichtbildgebende Streustrahlung wird auch nicht erfaßt.

Zum Zwecke der ortsrichtigen Wiedergabe des Detektorsignales ist es notwendig, räumlich getrennte Empfangsbereiche zu schaffen. Dabei ist die Strahlung in Richtung der Bewegung des Prüfgutes bereits strahlerseitig kollimiert, und eine Festlegung der Abtastintervalle ist nur entsprechend einer senkrecht zur Transportrichtung liegenden Ebene erforderlich. Hierzu ist vor dem Streustrahlungsdetektor ein vorzugsweise rotierender Modulator angeordnet. Er legt einen Empfangssektor fest, der durch die Drehbewegung den Abtastbereich durchläuft.

Die Erfindung ist nachfolgend anhand der Zeichnung näher erläutert. Es zeigen :

Fig. 1 einen Röntgenscanner nach der Erfindung, und

Fig. 2 eine Einzelheit des Röntgenscanners gemäß Fig. 1.

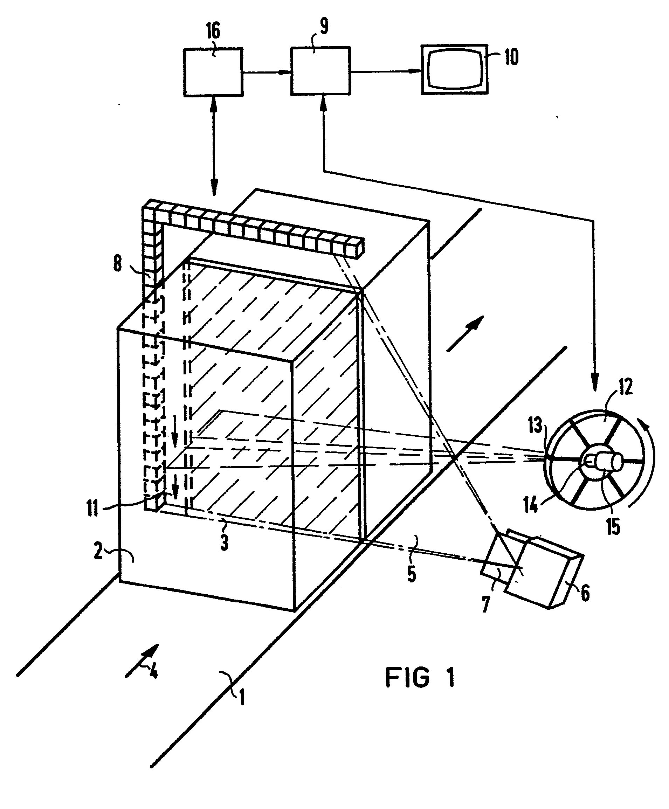

In der Fig. 1 ist ein Förderband 1 gezeigt, auf dem Prüfgut 2 in Richtung des Pfeiles 4 relativ zu einem fächerförmigen Röntgenstrahlenbündel 5 bewegt wird. Das Röntgenstrahlenbündel 5 wird durch einen Röntgenstrahler 6 erzeugt und mit Hilfe eines Kollimators 7 eingeblendet. Es trifft nach der Durchstrahlung einer Transversalschicht 3 des Prüfgutes 2 auf einer geknickten Zeile 8 aus einzelnen Detektoren auf. Die Detektorsignale werden von einem Multiplexer 16 seriell abgetastet und mit Hilfe einer Bildverarbeitungselektronik 9 in Signale umgewandelt, die dem Röntgenschattenbild des beim Transport des Prüfgutes 2 durchstrahlten Bereiches entsprechen. Ein Monitor 10 dient zur bildlichen Wiedergabe des Röntgenschattenbildes.

Neben dem Prüfraum 11 ist ein Detektor 14, 15 angeordnet, der von einem Szintillator 14 und einem lichtelektrischen Wandler 15 gebildet ist. Um diesen Detektor 14, 15 rotiert ein walzenförmiger Modulator 12 mit zentrischer Öffnung, dessen Drehzahl zur Abtastfrequenz der Zeile 8 synchronisiert ist.

Die Begrenzung des Empfangssektors erfolgt durch Schlitzblenden 13, die in den Modulator 12 radial eingearbeitet sind. Er ist so ausgerichtet, daß die vom Prüfgut 2 kommende Streustrahlung von dem in der Drehachse angeordneten Detektor 14, 15 detektiert wird.

Das serielle Ausgangssignal des Detektors 14, 15 wird mit Hilfe der Bildverarbeitungselektronik 9 dazu herangezogen, die Streustrahlungsverteilung im Prüfgut 2 auf dem Monitor 10 hervorgehoben darzustellen. Auf einem Farbmonitor wird dem Schattenbild die Streustrahlungsinformation farblich hinterlegt. Dabei ist die Farbsättigung ein Maß für die Intensität der ausgelösten Streustrahlung.

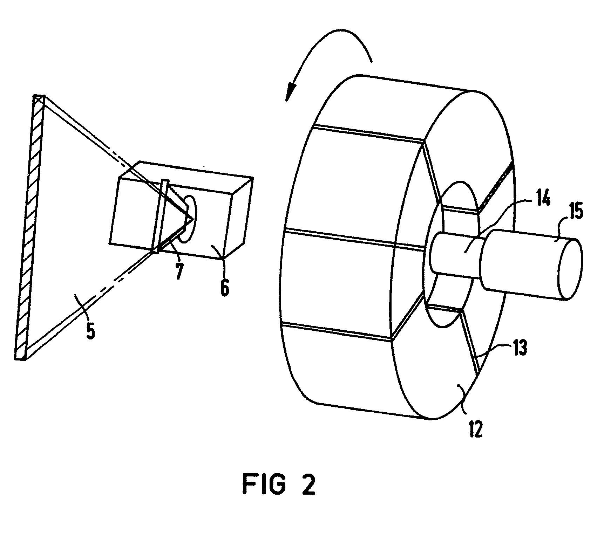

Die Fig. 2 zeigt den Detektor 14, 15 mit dem walzenförmigen Modulator 12. Der Empfangswinkel wird durch die Breite des Schlitzes 13 festgelegt. Die serielle Abtastung des Empfangsbereiches erfolgt in diesem Beispiel sechs Mal während einer Umdrehung.

Der Detektor 14, 15 weist einen stabförmigen Empfänger (Szintillator 14) auf, dessen Länge etwa der Walzenbreite entspricht und der in der Öffnung des Modulators 12 liegt. Es ist sinnvoll, das Empfangssystem so anzuordnen, daß sich der Detektor 14, 15 auf einer durch den Brennfleck laufenden Senkrechten zur Primärstrahlung 5 befindet. Man erreicht so die geringsten geometrischen Verzerrungen.

Als Streustrahlungsdetektoren eignen sich lichtempfindliche Halbleiter und Photovervielfacher mit vorgeschaltetem Szintillator, röntgenempfindliche Halbleiter und Geiger-Müller-Zählrohre.

Die Darstellung der beiden Bildinformationen kann auf einem oder mehreren Monitoren gleichzeitig oder zeitlich nacheinander ein- oder mehrfarbig erfolgen. Die hier favorisierte Form der farblich unterlegten gleichzeitigen Wiedergabe auf einem Monitor zeigt jedoch die besten Ergebnisse.

Bei dem dargestellten Röntgenscanner stellt der Modulator 12 mit den Schlitzblenden 13 ein Kollimatorrad dar, dessen Drehung mit der Abtastfrequenz der Zeile 8, die durch den Multiplexer 16 festgelegt ist, synchronisiert ist. Der Modulator 12 leitet demgemäß diejenigen Streustrahlungsanteile zum Streustrahlungsdetektor 14, 15 weiter, die in dem Prüfgutbereich entstehen, dessen Detektorsignal der Zeile 8 jeweils abgetastet wird.

## Patentansprüche

1. Röntgenscanner mit einem Röntgenstrahler (6) mit Kollimator (7) für ein fächerförmiges Röntgenstrahlenbündel (5) auf einer Seite und einer Zeile (8) von einzelnen Detektoren auf der anderen Seite einer Transportvorrichtung (1) für Prüfgut (2) sowie mit einer Elektronik (9) zur seriellen Erfassung und Verarbeitung der Detektorsignale, **dadurch gekennzeichnet,** daß neben dem Prüfraum (1) ein hochempfindlicher Streustrahlungsdetektor (14, 15) mit einem Modulator (12) so angeordnet ist, daß er nicht von der Primärstrahlung (5), sondern nur von der vom Prüfgut (2) ausgesandten Streustrahlung getroffen wird und daß Mittel (9) zur Darstellung der Streustrahlungsverteilung vorhanden sind, wobei der Modulator (12) auf die Abtastfrequenz der Zeile (8) synchronisiert ist, derart, daß er denjenigen Streustrahlungsanteil zum Streustrahlungsdetektor (14, 15) weiterleitet, der in dem Prüfgutbereich entsteht, dessen Detektorsignal der Zeile (8) jeweils abgetastet wird.

2. Röntgenscanner nach Anspruch 1, **dadurch gekennzeichnet,** daß der Modulator (12) über Schlitzblenden (13) verfügt, die die Streustrahlung kollimieren.

3. Röntgenscanner nach Anspruch 2, **dadurch gekennzeichnet,** daß der Modulator (12) von einer rotierenden Walze mit zentrischer Öffnung gebildet ist, in der die Schlitzblenden (13) radial verlaufen, wobei der Streustrahlungsdetektor (14, 15) mit seinem empfindlichen Teil (14) in der Öffnung liegt.

4. Röntgenscanner nach einem der Ansprüche 1 bis 3, **dadurch gekennzeichnet,** daß die Wiedergabe der Bildinformationen auf einem Monitor (10) einzeln oder gleichzeitig erfolgt.

## Claims

1. An x-ray scanner with an x-ray source (6) with a collimator (7) for a fan-shaped x-ray beam (5) on one side, and a line (8) of individual detectors on the other side of a transport device (1) for the object under examination (2), as well as with an electronic system (9) for sequential detection and processing of the detector signals, characterised in that next to the test room (1) a highly sensitive scattered radiation detector (14, 15) is arranged with a modulator (12), so that it is not struck by the primary radiation (5), but only by the scattered radiation emitted by the object under examination (2), and in that means (9) for representing the scattered radiation distribution are present, wherein the modulator (12) is synchronised to the scanning frequency of the line (8), in that it conveys further the scattered radiation portion to the scattered radiation detector (14, 15), which forms in the region of the object under examination, the detector signal of which of the line (8) is scanned in each case.

2. An x-ray scanner according to claim 1, characterised in that the modulator (12) has slotted diaphragms (13), which collimate the scattered radiation.

3. An x-ray scanner according to claim 2, characterised in that the modulator (12) is formed by a rotating roller with a central opening in which the slotted diaphragms (13) extend radially, wherein the scattered radiation detector (14, 15) lies with its sensitive part (14) in the opening.

4. An x-ray scanner according to one of claims 1 to 3, characterised in that the reproduction of the image information on a monitor (10) occurs independently or simultaneously.

## Revendications

1. Scanner X comportant un émetteur radiologique (6) possédant un collimateur (7) servant à délivrer un faisceau (5) de rayons X en forme d'éventail et disposé d'un côté d'un dispositif (1) de transport d'un objet à contrôler (2) et, une ligne (8) de détecteurs individuels, disposée de l'autre côté du dispositif de transport, et un circuit électronique (9) servant à détecter et traiter en série les signaux des détecteurs, caractérisé par le fait qu'un détecteur très sensible du rayonnement diffus (14, 15), comportant un modulateur (12), est disposé à côté de l'espace de contrôle (1) de manière à ne pas être atteint par le rayonnement primaire (5), mais uniquement par le rayonnement diffus émis par l'objet à contrôler (2), et qu'il est prévu des moyens (9) servant à représenter la répartition du rayonnement diffus, le modulateur (12) étant synchronisé sur la fréquence de balayage de la ligne (8) de manière à retransmettre au détecteur (14, 15) du rayonnement diffus, la partie de ce rayonnement qui apparaît dans la zone, le signal de la ligne (8), délivré par le détecteur, étant respectivement exploré.

2. Scanner X suivant la revendication 1, caractérisé par le fait que le modulateur comporte un diaphragme à fente (13), qui réalise une collimation du rayonnement diffus.

3. Scanner X suivant la revendication 2, caractérisé par le fait que le modulateur (12) est formé par un cylindre rotatif possédant une ouverture centrale, dans laquelle les diaphragmes à fentes (13) s'étendent radialement, la partie sensible (14) du détecteur (14, 15) du rayonnement diffus étant située dans l'ouverture.

4. Scanner X suivant l'une des revendications 1 à 3, caractérisé par le fait que la reproduction des informations de l'image s'effectue individuellement ou simultanément sur un moniteur (10).

FIG 1

**FIG 2**